# EUROPEAN PATENT APPLICATION

(11) **EP 0 543 412 A1**
(43) Date of publication of application: **26.05.1993**
(21) Application number: 92119832.1
(22) Date of filing: 20.11.1992
(51) Int. Cl.: C08J 9/06

(54) **Foaming composition and method for producing foamed polymers**

(30) Priority: 22.11.1991 US 796482; 22.11.1991 US 796493
(71) Applicant: QUANTUM CHEMICAL CORPORATION, Cincinnati, OH 45249 (US)
(72) Inventor: Murib, Jawab H., Cincinnati, Ohio (US); Damle, Pradeep D., Cincinnati, Ohio (US)
(74) Representative: Grünecker, Kinkeldey, Stockmair & Schwanhäusser Anwaltssozietät

(57) **Abstract**

A method of making a foamed polymer article by injection molding, using a foaming composition that evolves minimal water and does not form by-products which could pit or chalk the polymer surface. The foaming composition contains an alkali metal borohydride in an amount from 0.01 to 5.0 weight percent of the polymer to be foamed, and sodium dihydrogen phosphate or a polyhydric alcohol such as six-carbon mannitol as an activator to react with the borohydride and produce hydrogen gas. Boric acid can be included with the alcohol. The borohydride is kept separated from the other reactive components such as by encapsulation until gas production is desired when the polymer is heated and molded.

## Description

This invention relates generally to foamed polymer products. More particularly, the invention concerns a chemical foaming agent and a method of using such agent to make molded foamed polymer articles.

Foaming agents, also known as blowing agents, are used during processing of polymers to achieve a cellular structure in the final product. As described in the article "Foaming Agents" in Modern Plastics Encyclopedia (Mid-October 1989 Issue Volume 66, Number 11), chemical blowing agents (CBAs) are substances that decompose at elevated temperatures or through chemical reaction and form gaseous composition products. Reasons given for the use of foaming agents include weight reduction for savings in cost and material, better properties such as insulation against heat or noise, different surface appearances, improved stiffness, and different electrical properties.

One widely used inorganic chemical blowing agent is sodium borohydride ("SBH"). As explained in U.S. 4,769,397 to Lapierre et al., SBH reacts with water or some other proton donor or "activator" to release gas for foaming. That patent describes an activation system comprising a mixture of sodium bicarbonate and citric acid which reacted to evolve water and carbon dioxide.

In some applications, the use of a sodium bicarbonate/citric acid activation system has been associated with a phenomenon known as "chalking," in which a white material believed to be borax and sodium carbonate forms on the surface of a molded part.

Commercially available foaming agents are typically in the form of concentrates: active ingredients encapsulated in a carrier resin. This invention provides an improved foaming composition which is stable during storage and improved activators for SBH to minimize or avoid chalking problems.

The invention concerns a foamable polymeric composition comprising a polymer to be foamed and a foaming composition. The composition contains an alkali metal borohydride such as sodium borohydride in an amount from 0.01 to 5.0 weight percent of the polymer, and a foam activating amount of an activator selected from sodium dihydrogen phosphate or a polyhydric alcohol sufficient to react with the sodium borohydride. The sodium borohydride and activator are separated from direct contact with each other, such as by encapsulating the components, until gas production is desired. Boric acid can be included with the alcohol.

Novel foaming compositions and methods for making foamed injection molded articles using such compositions are described below. In the method of the invention, a foaming composition comprising SBH, an activator for the SBH, and a polymer to be foamed are all fed to an injection molding machine. The polymer melts as it moves through the machine's barrel and is mixed with the SBH and activator. The SBH and activator react in this mixture and evolve gas, resulting in a foamed polymer article.

Sodium borohydride ("SBH") is available from Morton International of Danvers, Massachusetts. To protect the SBH from contact with moisture or from other conditions which would cause a premature reaction, the SBH is preferably encapsulated in a carrier resin. Encapsulated SBH is available from Quantum Chemical Corporation, USI Division, as product code FM1776H which is 10% by weight SBH in a polystyrene carrier.

Borohydrides of other alkali metals such as lithium, potassium, rubidium, and cesium should be considered equivalents and can be used in this invention, although sodium borohydride is preferred.

Although SBH can react with many possible proton donor activators to evolve hydrogen gas, the choice of a suitable activator for use in foamed polymer products is more limited.

Not only must the activator function at the intended polymer processing conditions, but it should have no undesirable characteristics such as handling attributes, effects on processing equipment, or appearance in the final foamed product. An activator ideally should be non-volatile under the reaction conditions encountered during mixing and molding and should not form corrosive by-products in reaction with the sodium borohydride. Both the activator and its reaction products with SBH should be dispersible in the polymer to be foamed.

Certain polyhydric alcohols and sodium dihydrogen phosphate have been found to be effective activators for SBH with minimal undesired effects. Sodium dihydrogen phosphate, sometimes referred to as monobasic sodium phosphate, sodium acid phosphate, monobasic sodium orthophosphate, or sodium biphosphate, is a white powder that is stable until reacted with the SBH. This offers an advantage over dual-component activator systems such as sodium bicarbonate/citric acid in which the activator components may contact each other during encapsulation and can evolve water prematurely. Four to six carbon polyhydric alcohols occur in nature or can be made by hydrogenation of the corresponding sugars. Examples are erythritol, pentaerythritol, arabitol, xylitol, adonitol, mannitol, dulcitol, and sorbitol, of which erythritol, mannitol, dulcitol, and sorbitol are preferred.

Especially preferred is mannitol, which is derived from corn syrup or glucose and has six hydroxyl groups. Mannitol by itself can provide the necessary proton donor for reaction with the SBH. The alcohol activator can include boric acid which will react with the polyhydric alcohol. When boric acid is included, it is believed that the boric acid reacts with the mannitol to form a mannitol-borate complex and water. Both the complex and the water can react with the sodium borohydride and produce hydrogen gas and a sodium mannitol borate complex. This high molecular weight complex is dispersible within the foamed polymer and will not exude to the polymer surface.

Mannitol without boric acid is nevertheless preferred, in part because the water which forms has undesirable effects on the polymer processing equipment and in the molded article. A single component activator system also has advantages over dual-component systems in which a small percentage of the activator components may contact each other during encapsulation and can evolve water.

The foaming composition comprises SBH and the activator. The amount of the composition used to foam a polymer will depend upon the desired density of the foamed product, i.e., the amount of foaming desired. Generally, the concentration of SBH is low, ranging from 0.01 to 5.0, preferably 0.1 to 3.0, most preferably 0.1 to 0.3 percent by weight of the polymer to be foamed. Too little SBH and/or insufficient activator will produce insufficient foaming, while excess SBH will cause collapse of the cells in the foamed structure.

The amount of activator should be sufficient to react with the SBH and thereby cause at least some foaming of the polymer. In determining the relative amounts of activator and SBH in the foaming composition, the activator is advantageously available in at least stoichiometric amounts based upon the proton donor content of the activator component(s). Using sodium dihydrogen phosphate, the reaction is expected to proceed according to the following formula:

NaBH₄ + 2NaH₂PO₄·H₂O ―> 4H₂ + Na₂H₂P₂O₇ + NaBO₂ + H₂O

Anhydrous sodium dihydrogen phosphate may also be used, at greater expense. The molar ratio of sodium dihydrogen phosphate to SBH can range widely, but is preferably 1:1 to 4:1, more preferably about 2:1 to 2.5:1. Using mannitol as an example, the stoichiometric molar ratio of the hexahydric alcohol to SBH is 2:3. The ratio can range widely, but is preferably 0.3:1 to 2:1. A slight (e.g., about 20%) excess of activator is preferred particularly for economic reasons to maximize the potential of the relatively expensive SBH.

If boric acid is used, three moles of boric acid are required per mole of mannitol for a stoichiometric reaction, and six moles of water are produced. The water will also serve as a proton donor activator for the SBH, and the ratio of mannitol to SBH can therefore be reduced by one-third, from 2:3 to 4:9. Again, a slight excess of the activator is preferred; in a two-component activator, an excess of mannitol is ordinarily preferred to minimize the mount of produced water.

The SBH and the activator should be separated from direct contact with each other until gas production is desired. Separation of these components can be accomplished by known means. For example, the individual components can each be fed to the machine by separate hoppers or feed systems so that they contact each other only inside the extruder barrel. Encapsulation of at least the SBH in a carrier resin is preferred. As the polyhydric alcohols are crystalline compounds, they can be either encapsulated or dry-blended with a polyolefin or other resin. The sodium dihydrogen phosphate is conveniently encapsulated by melt-blending with a polyolefin and then pelletizing to form a concentrate which preferably consists of up to 50%, more preferably about 40%, by weight of the activator. The activator(s) and the SBH can then be premixed to form the foaming composition.

The carrier or encapsulating resin may be polystyrene, polyethylene, polypropylene or any other resin that is compatible with the processing conditions of the polymer to be foamed and that does not adversely affect the desired characteristics of the foamed article. Ideally, the carrier or encapsulating resin is the same material as the polymer to be foamed.

In the method of making a foam injection-molded article, the foaming composition it dispersed into a polymer to be foamed to form a mixture. The mixture is heated in the extruder barrel whereupon the reactive components evolve gas. The mixture is subsequently injected into a mold where the foamed polymer expands into a molded foam article.

The foaming composition of this invention can be used in almost any thermoplastic resin. Among the more commonly foamed resins are ethylene and propylene homopolymers and copolymers, polystyrene, acrylonitrile-butadiene-styrene (ABS), poly(phenylene oxide) (PPO), and poly(phenylene ether) (PPE).

The amount of foaming composition relative to the polymer to be foamed is preferably large enough to be easily and precisely measured, but small enough so that the composition (and particularly the carrier resin) will constitute a small percentage of the polymer. The exact amount is open to choice, but generally about 0.1 to 3.0 parts by weight of the foaming composition containing encapsulated SBH and the encapsulated activator are present per 100 parts by weight of the resin to be foamed. About 2 parts per hundred are preferred.

### EXAMPLE I

This example illustrates the use of boric acid and mannitol as an activator for SBH. Sodium borohydride concentrate FM1776H was obtained from Quantum Chemical Corporation, USI Division. This pellet form concentrate was prepared by melt compounding with polystyrene and comprises 10 percent by weight SBH.

The activator was prepared in two parts by dry blending of the components with polyethylene. The first part consisted of 68.25 g of mannitol dry blended with 68.25 g of PETROTHENE NA210 low density polyethylene (LDPE) fines from Quantum Chemical Corporation. The second part consisted of 46.5 g of boric acid dry blended with 46.5 g of NA210 LDPE.

A foaming composition was then prepared by mixing 71.25 g of the SBH concentrate, 136.50 g of the mannitol/LDPE blend, and 93.00 g of the boric acid/LDPE blend. From this total 300.75 g composition, 137 g was blended with 2133 g of polystyrene (Huntsman high impact polystyrene PS 331), resulting in a blend of 6 wt % foaming composition in polystyrene. The blend was then injection molded into tensile specimens at 400°F.

The molded samples exhibited 41.9% density reduction from a control sample of polystyrene with no foaming agent, 0.61 versus 1.05 g/cc. No pitting or chalking was noticed after several weeks storage at ambient conditions.

### EXAMPLE II

Sodium borohydride concentrate FM1776H was obtained from Quantum Chemical Corporation, USI Division. This pellet form concentrate was prepared by melt compounding with polystyrene and consists of 10 percent by weight SBH.

The activator was dispersed in a carrier resin by the following procedure. About 2.5 lbs. of PETROTHENE NA279 low density polyethylene (LDPE) from Quantum Chemical Corporation was milled on a two-roll mill at 280°F until it formed a continuous crepe. An equal amount of sodium dihydrogen phosphate was gradually added to the crepe at the nip of the two rolls. The composition was milled for five minutes, at which time the sodium dihydrogen phosphate had dispersed in the LDPE matrix. The crepe was removed from the mill and cooled to room temperature and then ground to a powder.

A mixture of 380 grams of the polystyrene-encapsulated SBH and 552 grams of the polyethylene-encapsulated activator was prepared by tumble blending. This mixture was then tumble blended with 2134 grams of impact grade polystyrene. The blend was then injection molded into specimens at 425° to 440°F using an extruder.

The molded samples exhibited 28.6% lower density than the corresponding unfoamed polystyrene under identical conditions, 0.75 versus 1.05 g/cc. No pitting or chalking was noticed after several weeks storage at ambient conditions.

## Claims

1. A composition capable of producing a foam when in combination with a foamable polymer comprising an alkali metal borohydride in isolated association with an activator, said activator being selected from a polyhydric alcohol or sodium dihydogen phosphate, the activator and borohydride being present in an amount such that when the activator is reactively combined with the borohydride a foam will be produced when in contact with the foamable polymer.

2. The composition of claim 1 in which the activator is erythritol, mannitol, dulcitol, sorbitol, pentaerythritol, arabitol, xylitol or adonitol.

3. The composition of claim 2 in which mannitol is present from 0.3 to 2.0 moles per mole of alkali metal borohydride.

4. The composition of claim 1 wherein the activator is sodium dihydrogen phosphate present in an amount from 1 to 4 moles per mole of alkali metal borohydride.

5. The composition of any of claims 1 to 4 in which the alkali metal borohydride is sodium borohydride.

6. The composition of any of claims 1 to 5 in which the borohydride and/or the activator is encapsulated in a carrier resin prior to contacting the polymer to be foamed.

7. The composition of claim 6 in which the carrier resin is of polystyrene, polyethylene, or polypropylene.

8. The composition of any of claims 1 to 7 wherein the polymer to be foamed is a thermoplastic polymer.

9. The composition of any of claims 1 to 8 where the foamable polymer is ethylene and propylene homopolymers and copolymers, polystyrene, acrylonitrile-butadienestyrene, poly(phenylene oxide), and poly(phenylene ether).

10. The composition of any of claims 1 to 9 further comprising boric acid.

11. A foamable polymeric composition comprising the foamable polymer and composition of any of claims 1 to 10, the borohydride being present from 0.01 to 5.0 weight percent of the polymer.

12. The method of making a foamed injection molded article which comprises contacting a foamable polymer with an alkali metal borohydride in the presence of an activator therefor, the activator being selected from a polyhydric alcohol or sodium dihydrogen phosphate, reacting the sodium borohydride and the activator, releasing gas, injecting the mixture into a mold and recovering the foamed article.

13. The method of claim 12 wherein the activator is erythritol, mannitol, dulcitol, sorbitol, pentaerythritol, arabitol, xylitol or adonitol and the borohydride is sodium borohydride.

14. An activator for use in foaming polymers utilizing a borohydride, the activator being sodium dihydrogen phosphate, erythritol, pentaerythritol, arabitol, xylitol, adonitol, mannitol, dulcitol, or sorbitol.

15. The activator of Claim 14 wherein the activator is encapsulated.
